# EUROPEAN PATENT APPLICATION

(11) **EP 4 552 955 A1**
(43) Date of publication of application: **14.05.2025**
(21) Application number: 24208655.1
(22) Date of filing: 24.10.2024
(51) Int. Cl.: B62D 29/04, B62D 47/02

(54) **COMPOSITE MATERIAL LOW-FLOOR ELECTRIC BUS BODY AND PANEL ASSEMBLY METHOD**

(30) Priority: 07.11.2023 LT 2023543
(71) Applicant: UAB Elektrinio transporto sistemos, 94102 Klaipéda (LT)
(72) Inventor: Naujekas, Alvydas, 92280 Klaipeda (LT)
(74) Representative: Zaboliene, Reda

(57) **Abstract**

This invention introduces an innovative modular construction and assembly method tailored for a low-floor electric bus body. Prioritizing both durability and structural integrity, the design incorporates lightweight composite panels, forming a versatile yet sturdy framework for modern transportation needs. A highlight of the design is the innovative bonding technique used, providing exceptional joint strength among the panels, notably between the roof, side panels, front, and rear sections. Another pivotal advancement lies in the body wall panels' vertical stiffness elements. These elements, adjustable in number and geometric dimensions, offer enhanced structural support, especially when considering varying equipment weights on the roof module. This holistic approach, merging modular adaptability with pioneering bonding and reinforced structural elements, sets a new standard in addressing the growing need for efficient, resilient, and customizable transportation solutions.

## Description

### FIELD OF THE INVENTION

The invention relates to a composite material low-floor electric bus body and panel assembly method.

### DESCRIPTION OF THE RELATED ART

At present, the prevailing technology for constructing vehicle bodies, including those of buses, predominantly revolves around the utilization of metallic (typically steel) constructions. These structures are joined together through mechanical connections, which may be either separable or inseparable, or via welding processes. However, this conventional approach to manufacturing bus bodies exhibits inherent drawbacks.

Primarily, the production of metallic bus bodies is characterized by labor-intensive and time-consuming procedures. The extensive manual labor required for shaping, assembling, and welding these structures results in long production time. Furthermore, the resultant metallic bus bodies necessitate subsequent treatments, including the application of anti-corrosion coatings, to safeguard them from environmental degradation.

In light of these limitations, industry has increasingly explored the adoption of composite materials as an alternative for constructing vehicle bodies, including those of buses. Composite materials present a range of notable advantages over traditional metallic constructions. These benefits include reduced weight, enhanced corrosion resistance, and improved structural integrity, thereby contributing to the overall efficiency, performance, and longevity of the vehicles. However, integrating composite materials into the production process necessitates innovative techniques and methodologies, as well as addressing challenges related to material properties and manufacturing processes.

Therefore, there exists a need for advancements in the field of bus body construction that overcome the limitations of conventional metallic structures while harnessing the benefits of modern composite materials.

The invention in patent document WO2004000634A1 (published on 31 December 2003) revolves around a bus body crafted from fiber-reinforced plastic. This design is not just a patchwork, but an intricate assembly of prefabricated units securely bonded together. Integral to the design are load-bearing members, supplemented by hollow supports crafted from fiber-reinforced sheets, which surround a specialized core. These supports are adeptly paired with matching adjoining members to ensure robust bonding. The architecture of the body is meticulously planned, entailing components like the roof with its upper window sash, platform with front and rear rails, side walls equipped with support brackets, and a designated section for the rear axle. Every feature is harmoniously integrated, tailoring the structure perfectly for large-volume buses, prioritizing both form and function. However, this kind of construction is not suitable for a flat - floor bus.

Patent document nr. KR20150070519A (published on 25 June 2015) The invention introduces a bus body crafted from composite materials, aiming to boost fuel efficiency by minimizing weight-vital for electric and hybrid vehicles. Traditional metal components, accounting for about 70% of a vehicle's weight, are replaced with lightweight composites, eliminating the welding approach common to steel bodies. Instead of conventional mechanical bonding, which often introduces weaknesses and requires additional steel parts, this design splits the bus body into upper and lower composite sections. These sections interlock and are bonded using adhesives at specific filler areas. To bolster rigidity and durability, connection sections incorporate a mix of steel and either carbon fiber reinforced plastic (CFRP) or glass fiber reinforced plastic (GFRP). This innovative design offers potential cost savings, shortened assembly time, and enhanced structural integrity while achieving fuel efficiency goals. However, if one of the two primary components becomes damaged or wears out, replacing or repairing it might be a larger undertaking than if the bus were constructed of several smaller, modular components.

An alternative technology of EV bus body is described in patent document Nr. WO2022081709A1 (published on 21 April 2022) whereby the invention details a method for creating composite vehicle components, such as walls, floors, and roofs, for vehicles like buses. The process involves forming these components by pultruding reinforcement structures (like pillars) and foam core members. Once these are pultruded, they are combined to create the vehicle component, which can range from a bus sidewall extending from the front to the rear. Specific design attributes allow for the incorporation of features like windows by cutting apertures into the formed component. Moreover, the invention features a unique assembly approach: components are designed with profiled edges so that one can be inserted into another and then rotated to lock them together. This interlocking design is versatile; components with the same shape can be made and positioned oppositely, allowing their edges to align seamlessly. Given the specialized nature of the component integration, repairs might be more challenging or costly, especially if a particular section of a component needs replacement yet is interlocked with another.

In KR20110116719A (published on 26 October 2011) the invention presents a lightweight composite body frame for buses, aiming to enhance the efficiency of electric vehicles by reducing their overall weight. This design integrates the strength needed for safety with the benefits of composite materials. The body frame consists of a ceiling frame for the bus's top structure and pillars for the sides. To produce this frame, a foam member is coated and shaped to fit the body frame's design. Carbon and glass fibers are then laminated onto this foam, and the resultant frame is shaped using a vacuum molding process. This approach not only reduces weight but also offers cost savings by using inexpensive materials like polystyrene foam, especially when multiple molds of varying shapes are needed. The problem is that the intricate design with numerous and complex pillars complicates the manufacturing process and can pose challenges in ensuring consistent production quality.

Accordingly, it is desired to provide composite material low-floor electric bus body.

This invention introduces a modular low-floor electric bus body constructed from lightweight composite modules, including base, front, side walls, rear, and roof. A distinctive double lap joint method with an expanded bonding surface is employed to firmly connect the roof and side panels. Furthermore, the body wall panels incorporate variable vertical stiffness elements, adapted to equipment weight on the roof. This design ensures a robust structure resistant to bending, twisting, and compression stresses.

### SUMMARY OF THE INVENTION

The invention relates to the automotive industry, specifically in the area of bus manufacturing and other modes of transportation. Traditional bus bodies are predominantly metal based, which, although robust, can be labor-intensive to produce and are susceptible to corrosion. To tackle these challenges, the proposed invention introduces an innovative construction approach for bus bodies using lightweight composite panels.

In essence, this new bus body design comprises a low-floor electric bus assembled from several composite panels: the floor, front, rear, sides, and roof. These panels, made using a vacuum infusion process, offer significant advantages: they're lightweight, resist corrosion, have good thermal properties, and don't necessitate special finishing treatments. The floor remains flat throughout the bus's length, while the roof incorporates spaces for essential equipment like batteries and conditioning systems.

Another key feature of this invention is its unique bonding method, which joins the roof and side panels, front, and rear modules. This bonding utilizes a double lap joint with an expanded bonding surface area, ensuring the modules are firmly held together. Moreover, the adhesive layer in the joint is subjected to a shear stress, enhancing its mechanical resistance. Complementing this, the body wall panels incorporate vertical stiffness elements, tailored to the weight of equipment attached to the roof module. These elements, available in varying numbers and dimensions, offer enhanced structural support. The construction approach is innovative; for example, the roof and side panels are bonded, whereas the side panels and floor are mechanically attached using screws. The outcome is a robust structure resistant to common vehicular stresses, such as bending and twisting.

In addition to the assembly's mechanical advantages, the modular construction method ensures faster and more efficient assembly processes. This innovative design, when compared to traditional counterparts, results in a bus body that is not only stronger and lighter but also leads to reduced energy consumption due to the decreased weight. The invention, while detailed for low-floor electric buses, holds potential for broader applications in the automotive industry.

### BRIEF DESRCIPTION OF DRAWINGS

FIG. 1: Low-floor electric bus body composite parts.
FIG. 2: Body - hollow section profile, comprised of composite panels schematic.
FIG. 3: Cross-section of the hollow body.
FIG. 4: Roof and side panel joint structural options.
FIG. 5: General views of roof and side panel joint structural options.
FIG. 6: Side and floor panel joint.
FIG. 7: Side panels.
FIG. 8: Side panel pillar.

### DETAILED DESCRIPTION OF THE INVENTION

The application of this modular electric bus design promises to revolutionize the urban transportation industry. Its modular assembly allows for more streamlined manufacturing processes, facilitating quick customization based on specific city needs or transportation demands. The use of lightweight, yet durable components not only enhance the bus's overall efficiency but also extends its lifespan, reducing maintenance costs in the long run. Furthermore, the adaptable nature of the design means that as technology evolves or transportation requirements shift, updates to individual bus modules can be made without overhauling the entire vehicle, ensuring a sustainable and future-proof solution for urban transit systems.

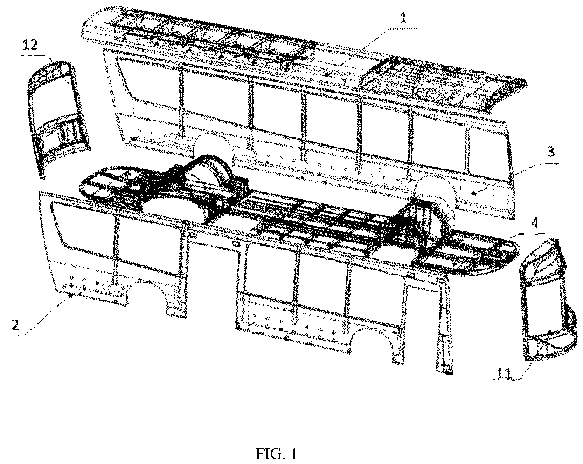

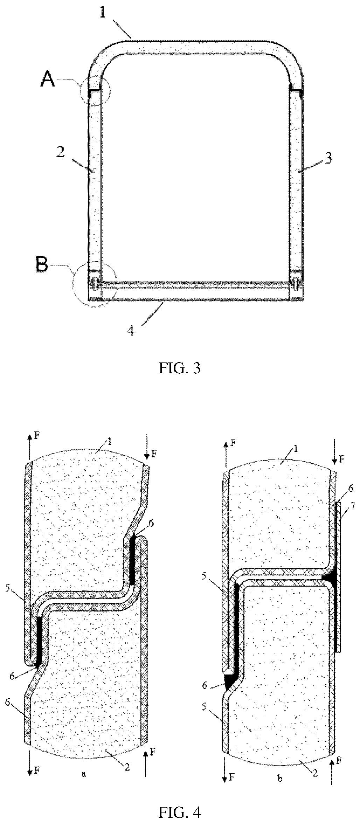

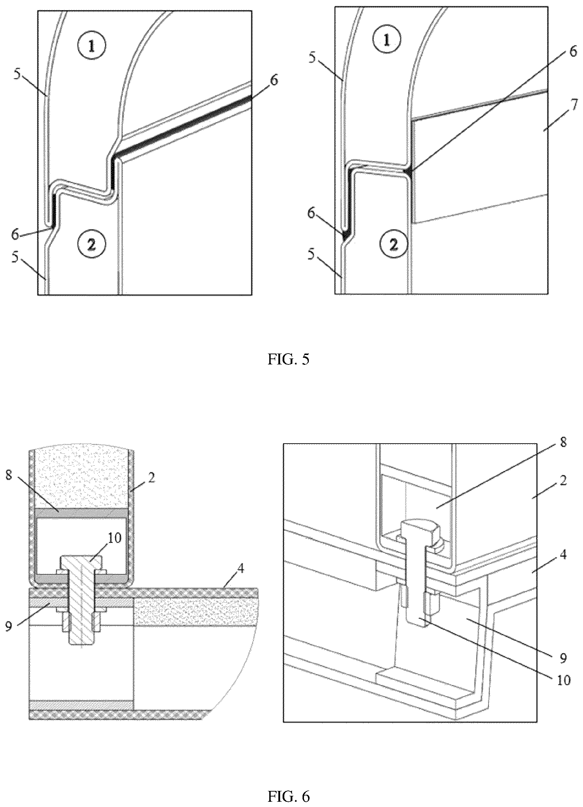

This document describes the construction of a low-floor electric bus body and its assembly method utilizing distinct panels. Central to this invention is the bus body FIG.1 assembled from individually manufactured lightweight composite panels, specifically comprising the bus's floor (4), front (11), two side walls (2,3), rear (12), and roof (1). The roof (1), side (2,3), front (11), and rear (12) panels are adhesively bonded together FIG. 5, while the side (2,3) and floor (6) panels are mechanically fastened (using bolts) to form a hollow profile structure resistant to bending, twisting, and compression forces FIG. 6. A distinctive feature of the roof and side panel bonding is the utilization of an overlapped double joint, valued for its extensive bonded surface area that can withstand shear forces FIG. 4.

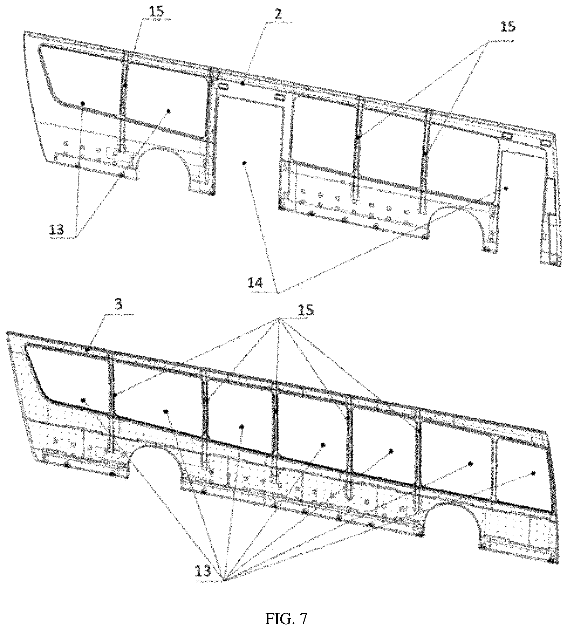

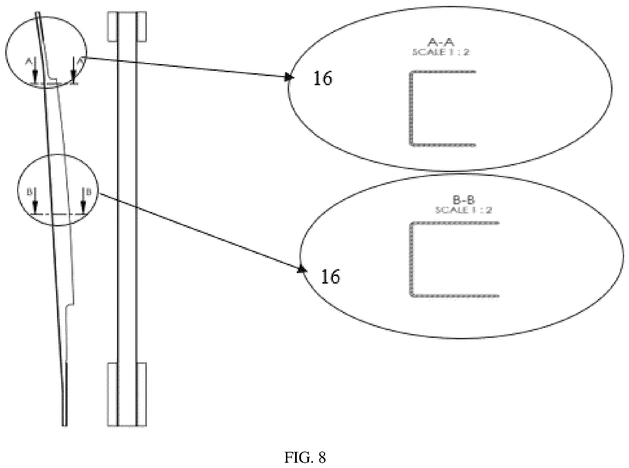

In this invention, the bus floor (4) is uniformly level throughout its entire length, while the roof panel (1) incorporates cavities or spaces designated for batteries, air conditioning, and other technological equipment. The side wall panels (2,3) of the bus body incorporate vertical structural elements or pillars (15) FIG. 7. The number and geometric dimensions of these pillars (15) are determined based on the weight of the equipment affixed to the roof panel (1). These structural elements are U-shaped (channel) (16) FIG. 8 cross-sectional steel or composite profiles, adhered to the inner side (towards the bus cabin) of the side panel (2,3). Each pillar's (15) cross-sectional area (16) is variable concerning the height of the side panel (2,3) and is determined by the load exerted on the side panel (2,3).

For the production of the bus body panels, structural foam, glass, and/or carbon fiber, polymeric resin, and steel insert components (joints) are utilized. All body panels are manufactured using specialized molds through the vacuum infusion process. The composite material of the panels ensures a lightweight bus body with corrosion resistance and excellent thermal properties. The proposed bus body structure and panel joining method offer the requisite strength, rigidity, and mechanical resilience, aligning with the vehicle's demands while facilitating a quick and technologically straightforward assembly process.

The composite body panels produced through the vacuum infusion are ready for finishing (without requiring special processing). When assembled, the bus body's construction is both sturdier than its counterparts and lighter, resulting in reduced energy consumption for vehicles with such a body structure.

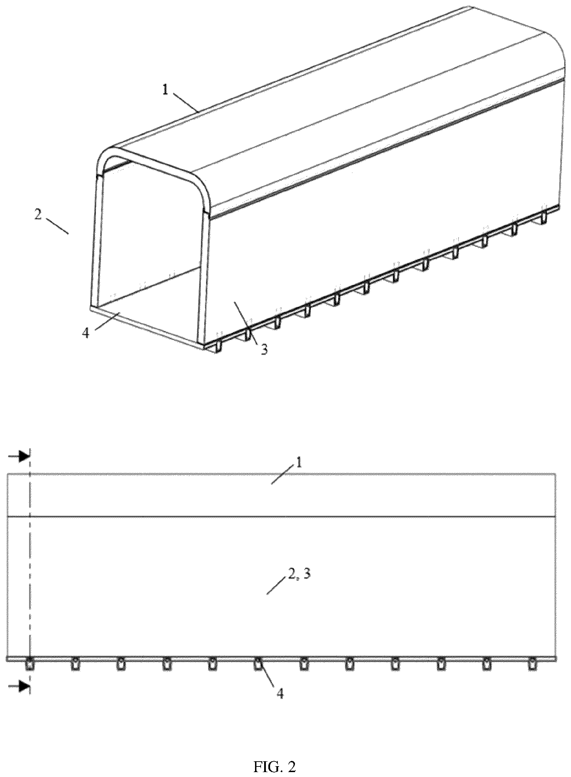

When rigidly interconnected, the roof (1), side walls (2,3), and the floor (4) panels form a hollow-profile structure FIG. 2 FIG. 3. Once the front and rear panels are attached to this structure, it becomes a closed unit, offering enhanced resistance against bending, twisting, and crushing loads.

The joining method between the roof (1) and side wall (2,3) panels involves an adhesive process FIG. 3. The composite laminate surfaces (5) of the roof (1) and side wall (2) panels, which are coated with adhesive, are pressed together and held in place until the layers of the composite laminates bond together. A significant advantage of the proposed adhesive joint design is that the adhesive layer (6) is subject to shear stress FIG. 4, which is a type of stress that the bonded joint is most resistant to. The type of structural adhesive, the bonded surface area, and the thickness of the adhesive layer are determined based on the loads acting on the joint.

Another potential use of the adhesive joint design is also illustrated in FIG. 4. Here, for the joining of composite panel laminate layers (5), an overlapping joint is used on one side of the panel, and a combined joint on the other side, where the laminate layers are bonded with a metal or composite strip (7). The advantage of the combined joint is the simplified production of the roof composite panel (1).

General views of the various designs of the joints between the roof (1) and side wall panels (2,3) are shown in FIG. 5. The front (11) and rear (12) panels of the body are connected to the roof (1) in a manner consistent with the method described above.

The roof (1), side walls (2,3), front (11), and rear (12) panels, once bonded, are mechanically connected - through bolted connections - to the floor (4) module. In the side wall (2,3), a steel insert (8) is laminated, and in the floor panel (4), another steel insert (9) is also laminated. These are interconnected using a bolt and a nut (10).

The design of the side wall (2,3) is consists of a composite sandwich panel (structural foam laminated with reinforced plastic) with openings for windows (13) and doors (14). Within the side wall panels (in the structural foam), steel inserts or joints are embedded, they are also laminated into the panel during production (using vacuum infusion in a specialized mold).

The side wall panels (2,3) are schematically represented in FIG. 7. Here, the right-side body panel (2) (as per the direction of travel), and (3) represents the left side. Both side panels have openings for windows (13), and the right side (2) also has openings for doors (14).

The side panels may (and typically do) include vertical stiffness elements/pillars (15), the number and geometric dimensions are determined based on the weight of the equipment mounted on the roof panel. These pillars (15) are U-shaped cross-sectional steel or composite profiles, glued to the inside (bus cabin side) of the side wall panel. The cross-sectional area of each element/pillar (16) varies with the height of the side panel (2,3) and is determined based on the loads acting on the side panel (2,3).

Additional inserts can be mounted in the side wall (2,3) for securing passenger seats, doors, and other interior elements to the bus body walls (2,3).

## Claims

1. A system of composite material low-floor electric bus body comprising composite panels of the roof (1), walls (2,3), front (11), rear (12), and floor (4), produced using vacuum infusion in specialized molds **characterized in that** rigidly interconnected, these panels form a closed hollow-profile structure resistant to bending, twisting, and compression forces.

2. A method for assembling composite material low-floor electric bus body of claim **1, characterized in that,** it has the following steps:
- bonding the roof (1) and side panels (2,3) of the body using a double lap joint with an increased bonded surface area;
- subjecting an adhesive layer, used for bonding the panels, to a shear force during the bonding step, thereby enhancing the mechanical resistance of the resulting joint.

3. The system of claim **1,** wherein the side panels (2,3) of the body are integrated with vertical pillars (15), the number and geometric dimensions (cross-sectional area) of which can vary based on the weight of the equipment mounted on the roof (1).

4. The system of claim **1,** wherein said roof panel (1) includes cavities designed to accommodate technological equipment including batteries and heating/ventilation systems.

5. The system of claim **1,** wherein the floor panel (4) remains flat across the entire length of the bus, enhancing passenger comfort and accessibility.

6. The system of claim **1,** wherein the pillars (15) are U-shaped cross-sectional form made of steel or composite profiles, which are adhered to the interior side (bus cabin side) of the side panel (2,3).

7. The system of claim **1,** wherein the cross-sectional area of each pillar (16) is variable relative to the height of the side panel (2,3) and is determined based on the variable load.
